# FASCICULE DE BREVET EUROPEEN

(11) **EP 0 680 876 B1**
(45) Date de publication et mention de la délivrance du brevet: **01.04.1998**
(21) Numéro de dépôt: 95401001.3
(22) Date de dépôt: 02.05.1995
(51) Int. Cl.: B64C 27/82

(54) **Rotor anti-couple caréné à pales flottantes**
Eingelassener Gegendrehmomentrotor mit Schaufeln mit eingebautem Spiel
Anti-torque shrouded rotor with play-mounted blades

(30) Priorité: 04.05.1994 FR 9405482
(43) Date de publication de la demande: 08.11.1995
(73) Titulaire: EUROCOPTER, F-13725 Marignane Cédex (FR)
(72) Inventeur: Monvaillier, Jérome Michel, F-13090 Aix-en-Provence (FR); Polveda, Jacques Jean, F-13400 Aubagne (FR)
(74) Mandataire: Bérogin, Francis

(56) Documents cités:
- EP-A- 0 212 724
- EP-A- 0 562 527
- FR-A- 1 593 008
- PROCEEDINGS OF THE NINETEENTH EUROPEAN ROTORCRAFT FORUM, 14 Septembre 1993 CERNOBBIO (ITALY), pages D4-1-D4-13, VIALLE ,ARNAUD 'A NEW GENERATION OF FENESTRON FAN-IN-FIN TAIL ROTOR ON EC 135'

## Description

L'invention se rapporte à un rotor multipale à pas variable, pour un dispositif anti-couple caréné d'aéronef à voilure tournante, en particulier d'hélicoptère, et sur lequel chaque pale est montée flottante au repos sur le moyeu du rotor.

Pour équiper des dispositifs anti-couple carénés d'hélicoptère, on connait déjà des rotors multipales à pas variable comprenant :
- un arbre rotor, monté en rotation autour d'un axe du rotor,
- un moyeu, solidaire en rotation de l'arbre rotor,
- des pales, dont chacune est reliée au moyeu par une partie d'emplanture comprenant au moins un bras flexible et torsible autour de l'axe longitudinal de changement de pas de la pale, et qui est partiellement logé dans un manchon de pied de pale, le manchon présentant deux portées coaxiales et espacées selon l'axe de la pale, par lesquelles il est monté tourillonnant autour de l'axe de la pale dans deux paliers du moyeu, ainsi qu'un levier de pas, excentré par rapport à l'axe de la pale, et
- un plateau de commande collective du pas des pales, qui est entraîné en rotation avec le moyeu et translatable selon l'axe du rotor par un axe de commande, le plateau présentant, pour chaque pale, une patte de commande de pas, s'étendant sensiblement selon l'axe du rotor, et articulée au levier de pas de la pale correspondante par un maneton à rotule, de sorte que tout déplacement axial du plateau par rapport au moyeu entraîne, par l'action de la patte sur le levier de pas, une rotation de la pale autour de son axe de pas.

Des rotors de ce type sont notamment décrits dans les brevets français FR 1 531 536 et américains US-3,594,097 et US-4,626,173.

Dans ces rotors connus, les efforts de commande de pas, transmis aux leviers de pas par le plateau et l'axe de commande, sont appliqués à l'aide d'une servo-commande hydraulique. En effet, ces efforts de commande sont relativement importants, compte tenu du caractère hyperstatique du montage des pales sur le moyeu du rotor. Ce montage hyperstatique résulte du montage pratiquement sans jeu des portées du manchon du pied de chaque pale dans les paliers du moyeu, ainsi que de la commande de pas réalisée par une liaison linéaire annulaire pratiquement sans jeu de la rotule de l'articulation du levier de pas sur la patte correspondante du plateau de commande. A cela s'ajoutent l'importance des efforts inertiels provenant de la pale, la reprise de la force centrifuge et la limitation de la rotation autour de l'axe de pas par le bras torsible de chaque pale.

En effet, les efforts de commande qu'il est nécessaire de produire sont destinés à vaincre non seulement les moments statiques appliqués à chaque pale, pour une position de pas donnée, mais également les moments résultant des efforts transitoires, qui se développent au passage d'une position de pas à une autre, par une action du pilote sur le palonnier.

En statique, pour une position de pas donnée, on sait que le moment exercé par l'effort de commande, appliqué sur le levier de pas en un point excentré de l'axe de pas, et autour de cet axe de pas, est égal au moment résultant des autres moments s'appliquant sur la pale. Le calcul de l'effort statique de commande repose donc sur l'équation d'équilibre en moment autour de l'axe de pas. Parmi ces autres moments s'appliquant sur la pale, les principaux sont le moment de rappel élastique, provenant du bras torsible, le moment de "rappel à plat", le moment de portance ou moment aérodynamique, le moment généralement piqueur du profil, dû à la cambrure de ce profil, ainsi que le moment de la force centrifuge.

On sait que le moment de rappel du bras torsible est dû à sa raideur en torsion et tient compte de l'éventuel précalage angulaire du bras torsible par rapport au pas nul d'une section de référence de la pale, laquelle est généralement vrillée.

Le moment de "rappel à plat" est le moment issu de l'effort centrifuge s'exerçant sur chaque élément de pale d'un rotor en rotation et ayant pour effet de s'opposer à toute variation du pas général, et de ramener les pales dans le plan de rotation. Il est connu que ce moment dépend de la répartition de l'inertie massique de l'ensemble de la pale (partie courante profilée et manchon) autour de son axe de pas. Ce moment étant en particulier responsable des efforts de commande que l'on doit fournir sur un rotor arrière, il est connu, pour réduire ce moment, et donc réduire les efforts de commande à fournir, de réduire cette inertie massique par rapport à l'axe de pas par l'addition de masses de compensation, dénommées "masses chinoises", sensiblement perpendiculairement à l'axe principal d'inertie de la pale.

Le moment de portance est dû au fait que le foyer de la force aérodynamique s'appliquant sur une pale se situe à l'écart de l'axe de pas. Enfin, le moment de la force centrifuge est dû au fait que cette dernière s'exerce sur la pale, dont le centre de gravité est, sur la corde, à une certaine distance de l'axe de pas, la conicité de la pale tendant à créer une composante de la force centrifuge qui est normale au plan rotor et qui, combinée à cette distance, créé un moment autour de l'axe de pas.

Les efforts statiques de commande étant ainsi déterminés à partir de l'équilibre des moments statiques précités, il convient de considérer les efforts transitoires de commande, c'est-à-dire les efforts de commande qui, au-delà des moments statiques précités, permettent de vaincre notamment le moment de frottement autour de l'axe de pas engendré par les réactions des paliers du moyeu sur les portées du manchon de chaque pale. Ces réactions proviennent, d'une part, de la reprise des moments de battement et de traînée, et de la force centrifuge en fonction du battement et de la traînée, et, d'autre part, de la reprise de l'effort de commande. Mais l'effort de commande dépend de la valeur des réactions aux paliers, qui elles-mêmes dépendent de la valeur de l'effort de commande. En effet, dans les montages hyperstatiques des pales des rotors de l'état de la technique précité, tout effort de commande se traduit par des réactions aux paliers occasionnant une augmentation du frottement, pouvant entraîner un certain grippage, que le pilote doit vaincre en augmentant l'effort de commande, donc également la réaction aux paliers, donc le frottement, d'où il résulte un risque de coincement. Ce grippage, dont l'intensité augmente avec celle de la force de commande, ne se produit pas sur les rotors connus précisément en raison de la présence de la servo-commande hydraulique qui fournit un effort de commande important. Mais celle-ci avec son circuit hydraulique constitue un composant relativement coûteux et d'une masse importante pratiquement à l'extrémité de la partie arrière de l'hélicoptère.

Le problème à la base de l'invention est de proposer des perfectionnements aux rotors connus du type précité de manière à réduire les efforts de commande nécessaires pour maintenir et changer le pas des pales, sans compromettre la sécurité, la précision et le confort du pilotage, et en supprimant la servo-commande et le circuit hydraulique associé, afin d'obtenir un rotor allégé, et d'un moindre coût de fabrication et de maintenance.

Un autre but de l'invention est de proposer un rotor du type précité, dont les efforts de commande sont réduits à environ 1/10 de ce qu'ils sont sur les rotors connus, l'effort de commande statique étant très faible, pour assurer un bon confort de pilotage à un pilote maintenant un pas, et l'effort transitoire de commande, nécessaire pour passer d'une position de pas à une autre par action sur une pédale du palonnier, étant supérieur à l'effort statique de commande mais dans une enveloppe raisonnable pour assurer la stabilité du pilotage et une bonne sensibilité, sans risque du phénomène dit d'"overshoot", consistant à déplacer une pédale du palonnier d'une trop grande amplitude, nécessitant une compensation correctrice sur l'autre pédale.

A cet effet, le rotor selon l'invention, du type précité, se caractérise en ce que la rotule est portée par l'un des deux éléments que sont le levier et la patte, et est engagée dans une ouverture oblongue d'une bague portée par l'autre des deux éléments, avec du jeu selon chacun des grand et petit axes de l'ouverture oblongue, le jeu selon le petit axe, sensiblement parallèle à l'axe du rotor, étant inférieur au jeu selon le grand axe, perpendiculaire au petit axe et transversal à l'axe de la pale, et chaque portée du manchon est montée dans le palier correspondant du moyeu avec un jeu permettant l'appui de la rotule contre la face latérale interne de l'ouverture oblongue du côté des extrémités du petit axe mais tel que la rotule ne peut pas venir en appui contre la face latérale interne de l'ouverture oblongue du côté des extrémités du grand axe.

On obtient ainsi un montage isostatique de la pale, les deux paliers se comportant sensiblement comme un monopalier, avec des jeux aux paliers qui permettent de réduire, voire de supprimer, les différentes réactions parasites aux paliers et sur la rotule de pas qui sont engendrées, dans les rotors de l'état de la technique, par le montage hyperstatique des pales. Cette réduction des réactions, obtenue sur un rotor selon l'invention, a donc pour effet de limiter le moment de frottement.

Les jeux aux paliers autorisent également des débattements en traînée et battement importants sans surcharger ni les pales ni la chaîne de commande. Cette augmentation des débattements permet de réduire davantage les valeurs des réactions aux paliers. En effet, combinés à la force centrifuge des pales, ces débattements engendrent des moments qui ont pour intérêt de contrer les moments générés par la portance et la traînée.

Cependant, la limitation des jeux aux paliers telle que proposée par l'invention permet de ne pas produire d'autres inconvénients, qui résulteraient d'une trop grande augmentation des jeux, tels que l'augmentation des débattements dynamiques au niveau de la rotule de commande de pas, les risques de chocs dynamiques sur les paliers- et une possible instabilité de la pale.

Le montage isostatique de l'invention permet non seulement d'éviter le montage de roulements, qui posent des problèmes d'encombrement et de masse, au niveau des paliers de rotation des manchons de pale sur le moyeu, mais également de réduire les contraintes dans la commande de pas, lesquelles contraintes pouvaient d'ailleurs être amplifiées dans les rotors connus, par le fait que la commande de pas s'effectue à l'aide d'un plateau de commande rigide. En effet, en l'absence de jeu et en présence de défaut (écart de position des pales les unes par rapport aux autres), le plateau de commande est mis en contrainte. Les jeux avec lesquels la rotule est reçue dans l'ouverture oblongue de la liaison du levier de pas au plateau de commande de l'invention permettent précisément de réduire les efforts d'une part de frottement au niveau du levier de pas et d'autre part la mise en contrainte du plateau de commande.

A cet effet, il est avantageux que, pour chaque pale, la rotule vienne en appui plan à contact ponctuel glissant contre la face latérale interne de l'ouverture oblongue correspondante.

Dans un mode de réalisation avantageusement simple pour obtenir un débattement angulaire de la pale en battement (selon le petit axe de l'ouverture) et en traînée (selon le grand axe de l'ouverture) permettant d'obtenir une réduction importante des efforts transitoires de commande, l'ouverture oblongue présente deux plats opposés parallèles à son grand axe et symétriques par rapport à son centre, et est ménagée dans une bague insérée et fixée dans un logement de l'élément qui la porte et retenue par un épaulement contre un bord dudit logement, et sur lequel épaulement sont ménagés deux méplats parallèles au grand axe de l'ouverture oblongue.

En outre, l'invention propose de choisir les points d'application des efforts de commande pour déterminer le sens des réactions aux paliers de manière à décharger les deux paliers. A cet effet, les réactions aux paliers issues des efforts de commande sont, selon l'invention, de signes opposés aux réactions aux paliers dûs à la reprise des moments de battement. Pour obtenir ce résultat, il est avantageux que, pour chaque pale, le manchon porte le levier de pas radialement à l'extérieur des portées, vers l'axe du rotor, et en saillie vers le bord d'attaque de la pale. Mais le même résultat avantageux peut être obtenu, si, pour chaque pale, le manchon porte le levier de pas radialement à l'extérieur et à proximité de la portée en position radiale externe par rapport à l'axe du rotor, et en saillie vers le bord de fuite de la pale, ou encore, si, pour chaque pale, le levier de pas, porté par le manchon entre ses deux portées est en saillie vers le bord d'attaque de la pale lorsqu'il est plus proche de la portée radiale interne que de l'autre portée, ou au contraire, en saillie vers le bord de fuite de la pale, lorsqu'il est plus proche de la portée radiale externe.

En plus des mesures ci-dessus, qui permettent, selon l'invention, de réduire les efforts de commande transitoires, des mesures complémentaires permettent de réduire les efforts de commande statiques. A cet effet, lorsque chaque bras torsible et flexible est lié à la pale correspondante en étant retenu dans le manchon correspondant, du côté de son extrémité radiale externe par rapport à l'axe du rotor, par au moins un axe de fixation flottant par rapport au manchon sensiblement parallèlement à l'axe rotor, cet axe de fixation est un axe allongé de grande taille, sensiblement parallèle à l'axe du rotor, procurant un effet de masses chinoises.

En outre ou alternativement, dans ce cas, l'axe peut fixer simultanément au moins une masse chinoise distincte au manchon.

Dans une forme préférée de réalisation, la masse chinoise comprend une douille, s'engageant dans un alésage transversal du manchon, et solidaire d'un collet, s'appliquant contre une face latérale du manchon, et présentant au moins une clef de détrompage pour son positionnement sur le manchon, le collet portant, du côté opposé à la douille, un contrepoids incliné sensiblement vers le bord d'attaque et vers le dessus de l'extrados ou vers le bord de fuite et vers le dessous de l'intrados de la pale, selon que la masse chinoise est fixée du côté respectivement de l'extrados ou de l'intrados de la pale, ce qui permet d'orienter favorablement la distribution de l'inertie de la pale autour de son axe de pas de manière à obtenir un moment de "rappel à plat" nul voire négatif, afin d'inverser le rappel à plat.

D'autres caractéristiques et avantages de l'invention découleront de la description donnée ci-dessous, à titre non limitatif, d'exemples de réalisation décrits en référence aux dessins annexés sur lesquels :
- la figure 1 est une vue en perspective avec arrachement et coupes partielles d'un rotor représenté sans ses moyens d'entraînement en rotation ni axe de commande,
- la figure 2 est une coupe diamétrale du rotor avec ses moyens d'entraînement en rotation et de commande de pas, la demi-coupe de gauche correspondant à la figure 1, et la demi-coupe de droite à une variante équipée de pales selon les figures 5 à 7,
- la figure 3 est une vue en élévation latérale d'une bague d'articulation d'un levier de pas sur le plateau de commande du rotor des figures 1 et 2,
- la figure 4 est une coupe selon IV-IV de la figure 3,
- la figure 5 est une vue en perspective d'une variante de pale pour l'équipement du rotor des figures 1 et 2,
- la figure 6 est une vue en perspective d'une variante de masse chinoise pour la pale de la figure 5,
- la figure 7 est une vue en perspective du pied de la pale de la figure 5 équipée de la masse chinoise de la figure 6, et
- la figure 8 est une coupe partielle, analogue à la figure 2, d'une variante de rotor.

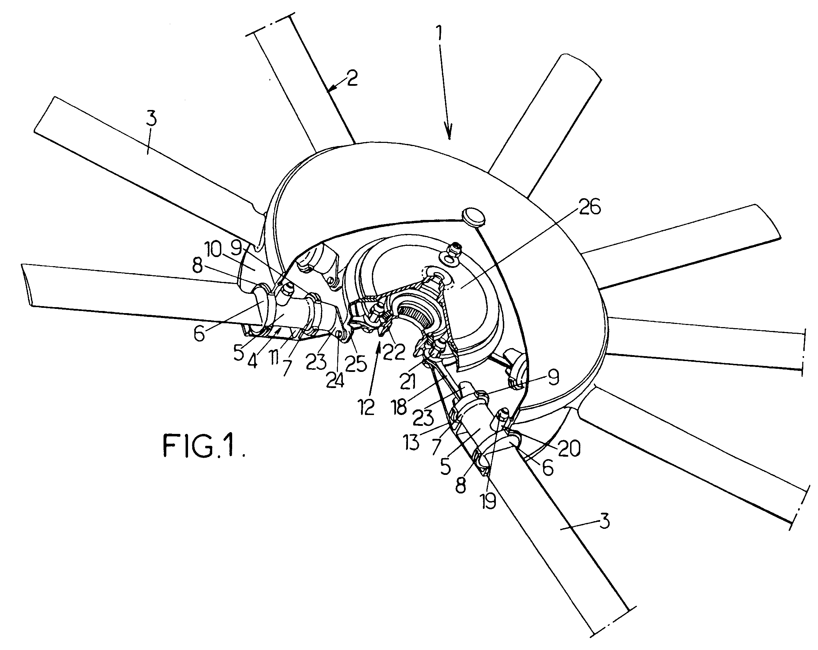

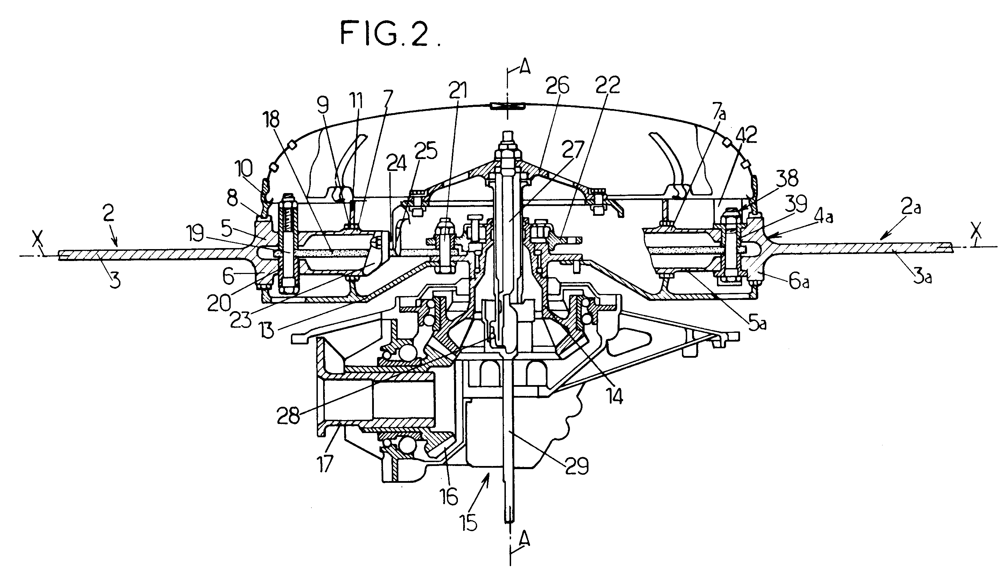

Le rotor décrit ci-dessous en référence aux figures 1 et 2 présente une architecture, des moyens d'entraînement en rotation et des moyens de commande collective du pas des pales qui sont très semblables, sinon identiques, à ceux des rotors décrits dans les brevets américains US-3,594,097 et US-4,626,173, auxquels on se reportera pour davantage de précisions, et dont la description concernant les objets précités est incorporée dans le présent mémoire descriptif par voie de références.

Le rotor multipale, désigné dans son ensemble par 1 sur la figure 1, est, de manière bien connue, destiné à être monté dans une veine carénée ménagée transversalement dans la partie arrière verticale d'un hélicoptère, comme représenté sur la figure 1 des deux brevets précités.

Dans l'exemple des figures 1 et 2, ce rotor comprend dix pales 2, dont chacune comporte une partie courante profilée 3, à profil aérodynamique, ainsi qu'un pied de pale 4. Ce dernier comprend un manchon 5 d'une seule pièce métallique, en alliage léger, avec la partie profilée 3, ainsi que deux portées 6 et 7 coaxiales, autour de l'axe longitudinal de changement de pas X-X de la pale, et de forme cyclindrique, ces deux portées 6 et 7 étant de plus écartées l'une de l'autre selon l'axe de pas X-X. Par ses portées 6 et 7, le manchon 5 est monté tourillonnant autour de l'axe de pas X-X dans deux paliers 8 et 9 coaxiaux montés chacun dans l'une respectivement de deux parois 10 et 11 d'un corps de moyeu 13 d'un moyeu repéré dans son ensemble en 12.

Ce moyeu 12 est entraîné en rotation autour de l'axe A-A du rotor par un arbre rotor 14, monté en rotation autour de l'axe A-A dans une boîte de transmission arrière repérée dans son ensemble par la référence 15, et non décrite en détail car d'une structure connue. Il suffit de rappeler que cette boîte de transmission arrière 15 comprend un engrenage conique 16 entraîné en rotation par un arbre de transmission 17 relié à une sortie de la boîte de transmission principale de l'hélicoptère, l'engrenage conique 16 étant en prise avec une couronne dentée à la base de l'arbre rotor 14.

La pale 2 est reliée au moyeu 12 par une partie d'emplanture constituée d'un bras 18 flexible et torsible autour de l'axe de pas de la pale. Comme dans le rotor décrit dans le brevet français FR 1 531 536, ce bras torsible 18, capable de retenir la pale 2 contre la force centrifuge qui la sollicite lors des rotations du rotor, est constitué par un faisceau de lames métalliques empilées, qui sont minces, d'une faible largeur et aussi longues que possible, compte tenu de l'encombrement du rotor, pour présenter une faible raideur en torsion. Le faisceau des lames empilées du bras 18 est retenu, à son extrémité radiale externe par rapport à l'axe rotor A-A, par un axe flottant 19, c'est-à-dire avec un jeu voulu, par rapport au manchon 5, et parallèlement à l'axe du rotor AA, pour éviter des contraintes supplémentaires, par contact entre le manchon 5 et le faisceau 18, dans toute configuration de la pale, l'axe 19 traversant deux entretoises allongées 20, sensiblement bout à bout parallèlement à l'axe rotor A-A, et logées dans des perçages en regard dans l'extrémité du faisceau 18 et dans des parties surépaissies du manchon 5, formant entre elles deux plats entre lesquels est disposée cette extrémité radiale externe du bras 18. A son extrémité radiale interne (par rapport à l'axe rotor A-A), ce bras 18 est retenu sur le moyeu 12 par un axe 21 parallèle à l'axe rotor A-A et le fixant entre deux parties centrales superposées d'une bride cannelée 22 et d'une couronne 122 solidaires en rotation par des cannelures axiales de l'arbre rotor 14. De plus, les axes 21 assurent simultanément la fixation de la bride cannelée 22 sur le corps de moyeu 13, pour solidariser l'ensemble en rotation autour de l'axe rotor A-A. Ainsi, chaque bras torsible 18 a sa partie radiale externe logée dans le manchon 5 du pied de pale 4 correspondant, en étant solidaire en torsion de ce dernier autour de l'axe de pas de la pale, tandis que sa partie radiale interne, sortant du manchon 5, est encastrée dans la bride cannelée 22.

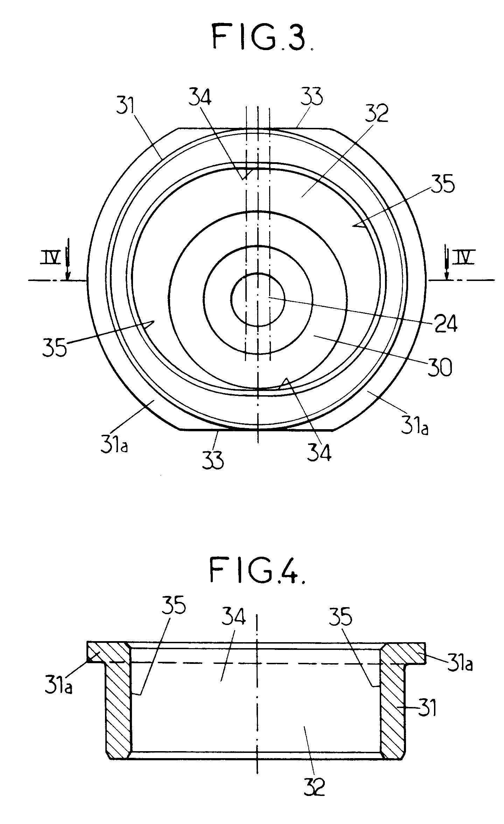

Pour commander le pas des pales 2, le manchon 5 de chacune d'elles présente un levier de pas 23, dont l'extrémité, excentrée par rapport à l'axe de pas X-X de la pale, supporte un maneton 24 boulonné supportant une rotule 30 reçue dans une ouverture 32 d'une bague 31 (voir figure 3) portée par une patte 25 de commande de pas, sensiblement parallèle à l'axe rotor A-A, et solidaire d'un plateau de commande 26 comportant autant de pattes 25 que le rotor comporte de pales 2. Ce plateau de commande 26 est solidaire en rotation d'un axe central de commande 27, traversant coaxialement (par rapport à l'axe rotor A-A) l'arbre rotor 14 tubulaire, et monté mobile axialement dans ce dernier, la base de l'axe central de commande 27 coopérant, par l'intermédiaire d'une butée à billes 28, avec une bielle de commande de pas 29, non tournante, mais déplacée axialement selon l'axe rotor A-A par la manoeuvre du palonnier, sans l'intermédiaire d'une servo-valve. Ainsi, l'axe 27 et le plateau 26 de commande peuvent être translatés selon l'axe rotor A-A, en tournant avec le moyeu 12 et les pales 2. Ce faisant, les pattes de commande 25 du plateau 26 entraînent les leviers de pas 23, par l'intermédiaire des rotules 30 qui les articulent les uns aux autres, en rotation autour des axes de pas, à l'encontre des bras de liaison 18, déformés en torsion.

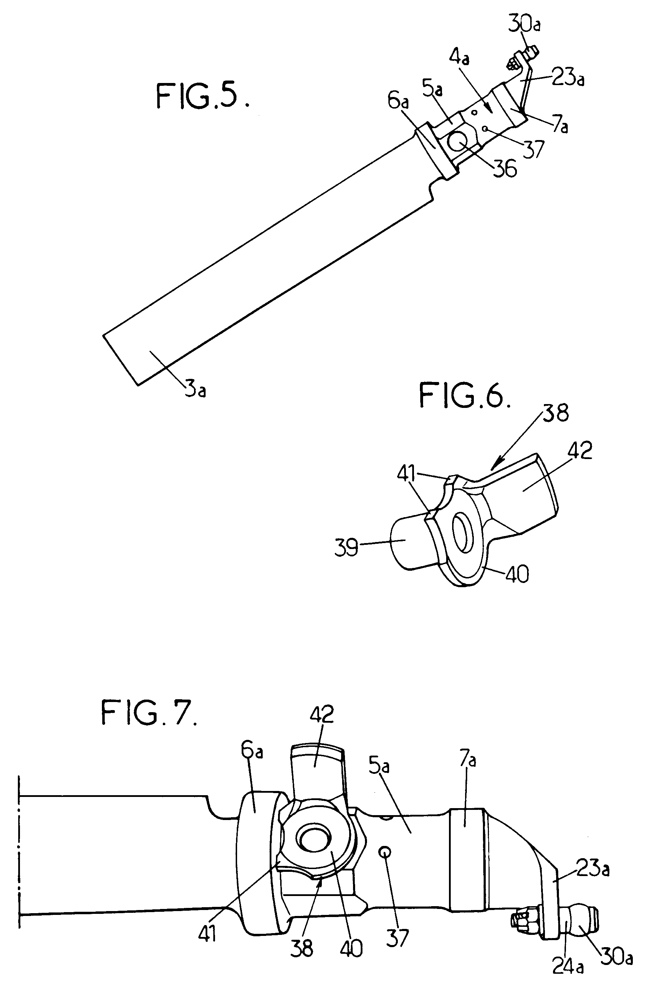

D'une manière particulière à l'invention, et comme plus précisément visible sur les figures 3 et 4, la rotule 30, montée sur le maneton 24 fixé à l'extrémité du levier de pas 23, est reçue dans une ouverture oblongue 32 de la bague 31, emmanchée de l'intérieur vers l'extérieur et fixée, par exemple par collage, dans un logement de forme correspondante ménagé dans la patte 25 du plateau de commande 26, en étant retenue contre le bord du logement par un épaulement 31a en saillie externe sur les côtés correspondant aux extrémités du grand axe de son ouverture oblongue 32. L'épaulement 31a présente deux méplats symétriques 33, parallèles aux grands axes de l'ouverture oblongue 32.

La rotule 30 est reçue dans l'ouverture oblongue 32 avec à la fois un jeu Jp selon son petit axe et un jeu Jg selon son grand axe. Le jeu Jp, selon le petit axe sensiblement parallèle à l'axe A-A du rotor, c'est-à-dire dans la direction des déplacements de la pale en battements et en pas, est inférieur au jeu Jg selon le grand axe, qui est perpendiculaire au petit axe et transversal à l'axe X-X de la pale, et s'étend sensiblement dans la direction des déplacements en traînée de la pale. Ce jeu Jg supérieur selon le grand axe résulte de la forme oblongue de l'ouverture 32, dont la paroi latérale interne présente deux zones plates 34 opposées et symétriques, aux extrémités du petit axe et parallèles aux méplats 33 de la bague 31. Par exemple, le jeu Jp dans le sens des battements peut être de 0,5 mm et le jeu Jg dans le sens de la traînée de 0,5 mm + 1,2 mm soit 1,7 mm, et la rotule 30 à surface en carbure de tungstène est en appui plan à contact ponctuel glissant sur la face latérale interne, également en carbure de tungstène, de l'ouverture oblongue 32.

De plus, les portées 6 et 7 du manchon 5 de pied de pale sont montées chacune dans le palier 8 ou 9 correspondant du moyeu avec un jeu radial nominal de, par exemple, 0,5 mm, pour des paliers 8 et 9 ayant un entraxe de 65 mm, supérieur à l'entraxe des paliers des réalisations antérieures, le palier 6 en position radiale externe par rapport à l'axe rotor A-A, ayant un diamètre de 47 mm et le palier 9, en position radiale interne, un diamètre de 34 mm, ces diamètres étant réduits par rapport à ceux des paliers des réalisations analogues de l'état de la technique. Cet entraxe augmenté et ces diamètres diminués des paliers 8 et 9 permettent de réduire la masse du pied de pale 4 ainsi que les valeurs des réactions aux paliers provenant de la reprise des moments de battements et de traînée, ce qui permet de réduire d'autant la valeur du moment de frottement, et donc la réduction des efforts de commande transitoires. Cependant, les valeurs retenues pour les diamètres des paliers restent compatibles avec l'encombrement et la procédure de montage des pales 2 sur le moyeu 12.

Ces jeux radiaux de montage des portées 6 et 7 dans les paliers 8 et 9 autorisent un débattement angulaire nominal résultant en battement et en traînée de ± 0,88°, qui permet d'obtenir des débattements au niveau de la rotule 30 dans l'ouverture oblongue 32 de sorte que la rotule peut venir en appui contre la face latérale interne de l'ouverture oblongue 32 du côté des extrémités du petit axe, c'est-à-dire contre les parties planes 34 ou directement à proximité de celles-ci, tandis que la rotule 30 ne peut pas venir en appui contre la face latérale interne de l'ouverture oblongue 32 du côté des extrémités de son grand axe, dans les parties repérées en 35 sur la figure 3. Il résulte également des jeux aux paliers 8 et 9 une réduction importante des efforts transitoires de commande du fait du montage avec jeux des rotules 30 dans les bagues 31.

Par ailleurs, en supposant qu'en position à pas nul à la section de référence, la rotule 30 soit centrée dans l'ouverture 32, et distante de chacune des zones planes 34 d'un jeu de 0,25 mm, toute commande de pas positif, ou négatif, à partir de cette position initiale, ne produit aucune conséquence, sur un début de course de 0,25 mm, pour reprendre le jeu, et avec un effort de commande nul. Puis, chaque augmentation du pas, en valeur absolue, correspond à un entraînement de la rotule 30 par la bague 31, déplacée avec le plateau de commande 26, ce déplacement de la rotule 30 étant transmis par le maneton 24 au levier de pas 23 qui entraîne la pale en rotation autour de son axe de pas. Donc, après une course initiale sans effet, pour reprendre le jeu ou une partie du jeu selon le petit axe (dans le sens des battements) il y a contact entre la rotule 30 et la bague 31 sensiblement au niveau d'une zone plane 34. Si l'on suppose que le pilote a commandé du pas positif, lorsqu'il souhaite réduire le pas tout en gardant un pas positif, malgré une diminution de l'effort de commande, il y a continuité du contact entre la rotule 30 et la bague 31 en raison des moments de rappel, en particulier moment de rappel en torsion du bras torsible 18, et moment de "rappel à plat" de la pale. L'effort de commande reste positif, quelles que soient les variations de pas dans cette zone, et ce n'est qu'en passant en pas négatif que le dispositif va changer de zone de contact 34, après, à nouveau, reprise du jeu Jp selon le petit axe, sans effet dans une plage de manoeuvre autour du pas nul. Ce phénomène, lié à la reprise du jeu dans le sens du battement, qui peut a priori être interprété comme une imprécision de la commande de pas, est en fait sans incidence et sans conséquence pratique sur la précision de pilotage, car ce phénomène est masqué par une zone de point mort, particulière aux rotors arrières anti-couple carénés, pour lesquels le pilote ne ressent pas d'effet sur la poussée du rotor par une variation du pas des pales sur une faible plage angulaire de part et d'autre du pas nul.

Par contre, dans le sens de la traînée, le jeu Jg plus important selon le grand axe de l'ouverture oblongue 32 est tel, compte tenu des jeux radiaux au niveau des paliers 8 et 9, qu'on évite tout contact de la rotule 30 avec la bague 31 dans les zones 35, du côté des extrémités du grand axe, pour éviter des réactions d'appui nuisibles qui augmenteraient les efforts de frottement aux appuis. En outre, en supposant possible un appui de la rotule 30 contre une zone 35, il se produirait sur la rotule 30 un effort transitoire dirigé vers l'autre zone 35 qui donnerait un moment de sens opposé au moment de commande de pas dont on a besoin, et appliqué par l'effort de commande sur la rotule 30 et à l'extrémité du levier de pas 23. En conséquence, pour un même couple de commande, il faudrait délivrer un effort de commande supérieur pour contrer l'effort transitoire ainsi obtenu. C'est la raison pour laquelle les jeux aux paliers 8 et 9 sont adaptés pour éviter tout contact de la rotule 30 avec le fond de l'ouverture oblongue 32 du côté des extrémités de son grand axe, ce contact n'étant possible que contre les zones planes 34 de l'ouverture 32.

Dans cet exemple, les mêmes résultats avantageux sont obtenus pour des jeux radiaux au niveau des paliers 8 et 9 compris entre environ 0,45 et 0,55 mm, autorisant un débattement angulaire compris entre environ ± 0,8° et ± 0,97° de la pale 2.

Afin de réduire encore le moment de frottement autour de l'axe de pas, on réalise des portées 6 et 7 du manchon 5 recouvertes d'un dépôt d'oxyde de chrome et tournant dans des paliers 8 et 9 en une matière plastique à faible coefficient de frottement tel que le Torlon (marque déposée). Les dépôts durs d'oxyde de chrome, assurant un effet de protection, sont de plus recouverts d'une couche de vernis en Téflon Epoxy (marque déposée). On obtient ainsi un coefficient de frottement dynamique de l'ordre de 0,15.

Dans l'exemple décrit, pour décharger les deux paliers 8 et 9 par des réactions aux efforts de commande de signes opposés aux réactions dues à la reprise des moments de battement, le levier de pas 23 de chaque pale 2 est à la fois en porte-à-faux par rapport aux portées 6 et 7, radialement à l'intérieur de la portée radiale interne 7, et en saillie du côté du bord d'attaque de la pale 2. La position du levier de pas 23 du côté du bord d'attaque a pour conséquence que l'effort de commande est de même signe que la poussée aérodynamique sollicitant la pale. La position du levier de pas 23 en porte-à-faux, à l'extérieur des paliers 8 et 9 et du côté du centre du rotor a pour avantage que le chargement en porte-à-faux du manchon 5 vient contrer le chargement en porte-à-faux induit par la poussée sur la pale. Il en résulte que, quelle que soit la valeur du pas, l'effort de commande a tendance à décharger les paliers 8 et 9, d'où une diminution de l'effort transitoire de commande.

De plus, pour réduire la valeur de l'effort statique dans la plage usuelle de pas (de la configuration de vol stationnaire à celle de vol en translation maximum vers l'avant), le calage angulaire du bras torsible 18 est fixé à 8°, par rapport à la direction de la normale au plan de corde de la pale 2 à un point pris à 0,7 R, où R est le rayon du rotor, ce qui correspond à un point particulier sur l'envergure de la pale 2, dont le profil de la partie courante 3 est cambré et vrillé. Comme la plage totale de pas s'étend de - 25° à + 35°, le calage angulaire du bras torsible 18 est fixé à 3° de plus que le milieu de la plage totale de pas à 0,7 R afin de réduire davantage la raideur en torsion du faisceau dans la plage usuelle de pas. Ce décalage de 3° engendre une légère augmentation de la contrainte maximum de torsion, qui n'est pas préjudiciable à la tenue du faisceau de lames constituant le bras torsible 18. En effet, chaque bras torsible 18 est constitué d'un empilage nominal de 23 lames d'acier inoxydable, recouvertes éventuellement d'un dépôt anti-fretting, d'une épaisseur de 0,2 mm et d'une longueur torsible d'environ 85 mm, cette valeur résultant d'un compromis entre la raideur du bras torsible 18 et le diamètre du moyeu du rotor.

On constate qu'un tel bras torsible 18 comporte sensiblement deux fois plus de lames, chacune deux fois moins épaisse, que celles constituant les faisceaux métalliques torsibles sur les rotors anti-couple connus réalisés selon le brevet US-3,594,097.

La réduction de l'inertie massique autour de l'axe de pas, inertie à laquelle le moment de rappel à plat est directement proportionnel, est obtenue par une optimisation de la répartition des inerties de l'ensemble de la pale 2, dans sa partie courante 3 comme dans son pied de pale 4, et par l'adjonction de masses chinoises.

L'optimisation de la répartition des inerties de la partie courante profilée 3 a été obtenue en adoptant un calage de l'axe de pas à environ 40 % sur la corde, à partir du bord d'attaque de la pale. Ce calage apparaît simultanément favorable au centrage de la pale, nécessaire pour réduire au maximum le moment de la force centrifuge, par la réduction de la distance entre le centre de gravité de la pale et l'axe de pas.

En outre, il a été adopté un profil aérodynamique de type OAF, à cambrure et vrillage évolutifs le long de l'envergure de la pale, ce qui a pour avantage supplémentaire de procurer un faible moment de portance piqueur.

Le profil OAF choisi, le calage de l'axe de pas et le centrage de la pale concourent à réduire l'inertie massique par rapport à l'axe de pas, ce qui réduit d'autant le moment de rappel à plat, et donc aussi l'effort statique de commande. De plus, dans l'exemple des figures 1 et 2, afin de diminuer encore l'inertie massique par rapport à l'axe de pas de la pale, et donc les efforts statiques de commande, en profitant du fait que chaque bras torsible 18 n'est plus directement intégré au longeron de la partie profilée 3 de la pale 2 correspondante, comme décrit dans US-4,626,173, mais relié au manchon 5 par l'axe 19 et les entretoises 20, formant axe de retenue flottant, ces entretoises 20 forment des masses chinoises directement installées sur l'axe de liaison. Pour optimiser le rapport efficacité/masse, on donne à ces entretoises 20 ainsi qu'à l'axe 19 la plus grande longueur possible, compte tenu des impératifs de montage et d'encombrement. Ceci est apparent sur la figure 1 et sur la demi-coupe de gauche de la figure 2.

Cependant, la position angulaire des masses chinoises constituées par l'axe 19 et les entretoises 20 n'est pas parfaite, puisque ces éléments sont sensiblement parallèles à l'axe A-A du rotor, alors qu'il existe un précalage de 8°, à torsion nulle du bras torsible 18, entre l'axe 19 de retenue de ce bras 18 dans le manchon 5 et la normale au plan de la corde au point de l'envergure de la pale 2 correspondant à 0,7 R, et qui est le point de référence à partir duquel est calculée l'inertie massique équivalente de toute la pale 2.

Pour corriger cet inconvénient, on monte sur le rotor des figures 1 et 2, et comme représenté sur la demi-coupe de droite de la figure 2, la variante de pale de la figure 5 dont le manchon est équipé, comme sur la figure 7, de deux masses chinoises selon la figure 6.

La pale de la figure 5 ne se distingue de celles du rotor des figures 1 et 2 que par son pied de pale 4a dont le manchon 5a présente, dans sa partie radiale externe directement adjacente à la portée externe 6a, une partie à facettes planes, formant les plats entre lesquels est retenue l'extrémité radiale externe du bras torsible correspondant, non représenté, à l'aide d'un axe, également non représenté, traversant un alésage transversal 36 dans les deux faces opposées du côté de l'extrados et de l'intrados de la pale. Pour le reste, on retrouve une portée radiale interne 7a, un levier de pas 23a portant le maneton 24a avec la rotule 30a, en porte-à-faux au-delà de la portée 7a, vers l'intérieur (vers le centre du rotor) et en saillie du côté du bord d'attaque de la pale, et une partie courante profilée 3a qui sont identiques aux éléments correspondants de la pale 2. Des petits perçages 37 sont pratiqués à différents endroits du manchon 4a, pour fixer des éventuelles masses d'équilibrage individuel des pales. La position de ces masses concourt également à renforcer l'effet de "masses chinoises".

La masse chinoise 38 de la figure 6 comprend une douille 39 cylindrique, se montant dans l'alésage 36, et solidaire à une extrémité d'un collet 40 s'appliquant contre une face correspondante du manchon 5a, et dont la périphérie présente, d'un côté destiné à être appliqué contre la face radiale interne de la portée externe 6a, deux méplats 41 aux extrémités d'une échancrure et formant des clefs de détrompage pour la mise en place de la masse chinoise 38 sur le manchon 5a, comme représenté sur la figure 7. Le collet 40 de la masse chinoise 38 est d'une seule pièce métallique non seulement avec la douille 39 mais également, du côté opposé, avec une languette massive 42, ayant la forme générale d'une portion de tronc de cône relativement épaisse, formant un contrepoids cintré et incliné sur l'axe de la douille 39 et de l'ouverture centrale du collet 40, destinées à recevoir l'axe de fixation de la masse chinoise 38 sur le manchon 5a, comme dans l'exemple précédent. La position de la languette 42 par rapport aux clefs 41 de détrompage et son inclinaison sur l'axe de la douille 39 sont telles que, lorsque la masse chinoise 38 est montée sur le manchon 5a (voir figure 7), la languette 42 est inclinée vers le bord d'attaque et vers le dessus de l'extrados de la pale, lorsque la masse 38 est fixée sur la facette du manchon 5a du côté de l'extrados. Par contre, lorsque la masse chinoise 38 est fixée sur la facette du manchon 5a tourné du côté de l'intrados de la pale, la languette 42 de la masse chinoise 38 est inclinée vers le bord de fuite et vers le dessous de l'intrados de la pale, comme représenté sur la figure 7. Le manchon 5a est de préférence équipé de deux masses chinoises 38, l'une à chaque extrémité de l'alésage transversal 36 du manchon 5a, de sorte que les deux languettes 42 assurent une répartition favorable de l'inertie massique autour d'un axe incliné d'une manière à compenser le précalage angulaire du bras torsible 18.

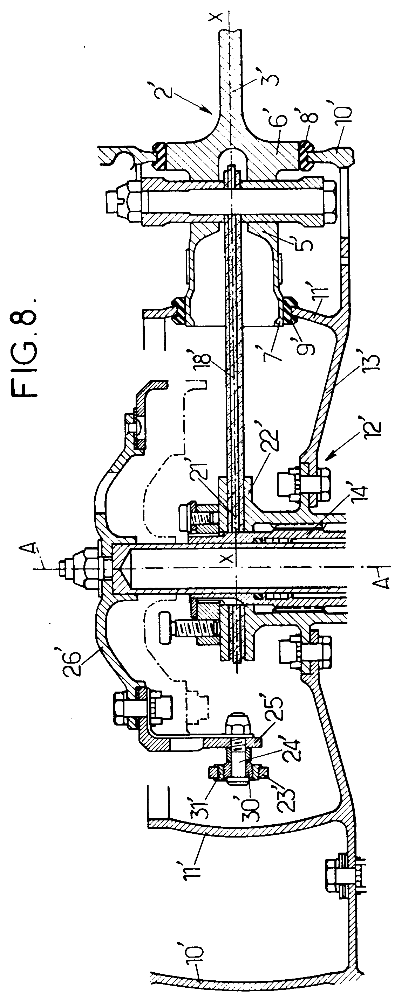

La figure 8 représente partiellement et en coupe un autre exemple de rotor, dont on ne décrira ci-dessous que les différences essentielles par rapport à celui des figures précédentes, et dont les éléments analogues seront repérés par les mêmes références affectées d'un symbole prime.

Le bras torsible 18' de chaque pale 2' n'est plus un faisceau de lames propre à la pale 2' correspondante, mais un bras radial d'un faisceau en étoile, comportant autant de bras que le rotor comporte de pales, le centre de l'étoile étant plat, annulaire et encastré en 21' entre deux brides radiales annulaires centrales 22' du moyeu 12', le faisceau en étoile étant ainsi analogue à celui décrit dans le brevet US-3,594,097.

Une autre différence est que sur la figure 8, le maneton 24' portant la rotule 30' est fixé par vissage sur la patte 25' correspondante du plateau de commande 26', tandis que la rotule 30', identique à la rotule 30 de l'exemple précédent, est reçue avec les jeux nécessaires dans l'ouverture oblongue d'une bague 31', identique à la bague 31 de l'exemple précédent, et montée dans un logement du levier de pas 23', également en porte-à-faux à l'intérieur de la portée interne 7' du manchon de pale 5' et en saillie du côté du bord d'attaque de la pale 2'. Dans cet exemple, la rotule 30', par exemple en acier, est donc portée par la patte de commande 25', tandis que la bague 31', par exemple en une matière plastique à faible coefficient de frottement, telle que le Torlon (marque déposée) est portée par le levier de pas 23'. Comme la masse de la rotule 30' et du maneton 24' est supérieure à la masse de la bague 31', la fixation de la rotule et du maneton sur le levier de pas de la pale, comme sur les figures 1 et 2, a pour effet d'augmenter la masse tournante et l'inertie massique de la pale, et donc le moment de rappel à plat. Il est donc préférable d'adopter le montage de la figure 8, en fixant les éléments pesants (rotule 30' et maneton 24') sur le plateau 26', et la bague 31', de moindre masse, sur la pale 2'. On réduit ainsi le moment de rappel à plat, et donc aussi les efforts de commande. Mais ce montage n'est possible que si le nombre des pales du rotor est suffisamment faible par exemple 8 pales, pour libérer, en direction circonférentielle, suffisamment de place pour y disposer des leviers de pas 23' de taille suffisante pour loger les bagues 31', et sans risque d'interférence avec d'autres composants du rotor lors des rotations des leviers 23'.

On réalise ainsi des rotors qu'il est possible de commander avec de faibles efforts de commande statique et transitoire, de l'ordre de 1/10 à 1/12 de ceux nécessaires dans les réalisations analogues de l'état de la technique, et en utilisant des bras torsibles dont le moment de torsion est de l'ordre de 1/8 de ceux des rotors antérieurs.

On peut ainsi faire l'économie d'une servo-commande et du circuit hydraulique associé dans la chaîne de commande collective du pas des pales d'un rotor anti-couple caréné d'hélicoptère.

## Revendications

1. Rotor multipale à pas variable, pour un dispositif anti-couple caréné d'hélicoptère, et comprenant :
- un arbre rotor (14), monté en rotation autour d'un axe (A-A) du rotor (1),
- un moyeu (12), solidaire en rotation de l'arbre rotor (14),
- des pales (2), dont chacune est reliée au moyeu (12) par une partie d'emplanture comprenant au moins un bras (18) flexible et torsible autour de l'axe longitudinal de changement de pas (X-X) de la pale (2), et qui est partiellement logé dans un manchon (5) de pied de pale (4), le manchon (5) présentant deux portées (6, 7) coaxiales et espacées selon l'axe (X-X) de la pale (2), par lesquelles il est monté tourillonnant autour de l'axe (X-X) de la pale (2) dans deux paliers (8, 9) du moyeu (12), ainsi qu'un levier de pas (23), excentré par rapport à l'axe (X-X) de la pale (2), et
- un plateau (26) de commande collective du pas des pales (2), qui est entraîné en rotation avec le moyeu (12) et translatable selon l'axe (A-A) du rotor (1) par un axe de commande (27), le plateau (26) présentant, pour chaque pale (2), une patte (25) de commande de pas, s'étendant sensiblement selon l'axe (A-A) du rotor (1), et articulée au levier de pas (23) de la pale (2) correspondante par un maneton (24) à rotule (30), de sorte que tout déplacement axial du plateau (26) par rapport au moyeu (12) entraîne, par l'action de la patte (25) sur le levier de pas (23), une rotation de la pale (2) autour de son axe de pas (X-X),
caractérisé en ce que la rotule (30) est portée par l'un des deux éléments que sont le levier (23) et la patte (25), et est engagée dans une ouverture oblongue (32) d'une bague (31) portée par l'autre des deux éléments, avec du jeu selon chacun des grand et petit axes de l'ouverture oblongue (32), le jeu selon le petit axe, sensiblement parallèle à l'axe (A-A) du rotor (1), étant inférieur au jeu selon le grand axe, perpendiculaire au petit axe et transversal à l'axe (X-X) de la pale (2), et chaque portée (6, 7) du manchon (5) est montée dans le palier (8, 9) correspondant du moyeu (12) avec un jeu permettant l'appui de la rotule (30) contre la face latérale interne de l'ouverture oblongue (32) du côté des extrémités du petit axe mais tel que la rotule (30) ne peut pas venir en appui contre la face latérale interne de l'ouverture oblongue du côté des extrémités du grand axe.

2. Rotor selon la revendication 1, caractérisé en ce que, pour chaque pale (2), la rotule (30) vient en appui plan à contact ponctuel glissant contre la face latérale interne de l'ouverture oblongue (32) correspondante.

3. Rotor selon l'une des revendications 1 et 2, caractérisé en ce que l'ouverture oblongue (32) présente deux plats (34) opposés, parallèles à son grand axe et symétriques par rapport à son centre, et est ménagée dans une bague (31) insérée et fixée dans un logement de l'élément qui la porte et retenue par un épaulement (31a) contre un bord dudit logement, et sur lequel épaulement (31a) sont ménagés deux méplats (33) parallèles au grand axe de l'ouverture oblongue (32).

4. Rotor selon l'une quelconque des revendications 1 à 3, caractérisé en ce que, pour chaque pale (2), le manchon (5) porte le levier de pas (23) radialement à l'extérieur des portées (6, 7) vers l'axe (A-A) du rotor (1), et en saillie vers le bord d'attaque de la pale (2).

5. Rotor selon l'une quelconque des revendications 1 à 3, caractérisé en ce que, pour chaque pale (2), le manchon (5) porte le levier de pas (23) radialement à l'extérieur et à proximité de la portée (6) en position radiale externe par rapport à l'axe (A-A) du rotor (1), et en saillie vers le bord de fuite de la pale (2).

6. Rotor selon l'une quelconque des revendications 1 à 3, caractérisé en ce que, pour chaque pale (2), le levier de pas (23), porté par le manchon (5) entre ses deux portées (6, 7), et plus proche de la portée radiale interne (7) par rapport à l'axe (A-A) du rotor (1) que de l'autre portée (6), est en saillie vers le bord d'attaque de la pale (2).

7. Rotor selon l'une quelconque des revendications 1 à 3, caractérisé en ce que, pour chaque pale (2), le levier de pas (23), porté par le manchon (5) entre ses deux portées (6, 7) et plus proche de la portée radiale externe (6) par rapport à l'axe (A-A) du rotor (1) que de l'autre portée (7), est en saillie vers le bord de fuite de la pale (2).

8. Rotor selon l'une quelconque des revendications 1 à 7, caractérisé en ce que chaque bras (18) torsible et flexible est lié à la pale (2) correspondante en étant retenu dans le manchon (5), du côté de son extrémité radiale externe par rapport à l'axe (A-A) du rotor (1), par au moins un axe de fixation (19) flottant par rapport au manchon (5) sensiblement parallèlement à l'axe (A-A) du rotor (1) et allongé sensiblement parallèlement à l'axe (A-A) du rotor (1), de façon à procurer un effet de masses chinoises.

9. Rotor selon l'une quelconque des revendications 1 à 8, caractérisé en ce que chaque bras (18) torsible et flexible est lié à la pale (2) correspondante en étant retenu dans le manchon (5) du côté de son extrémité radiale externe par rapport à l'axe (A-A) du rotor (1), par au moins un axe de fixation (19) flottant par rapport au manchon (5) sensiblement parallèlement à l'axe (A-A) du rotor (1) et lui-même sensiblement parallèle à l'axe (A-A) du rotor (1) et qui fixe simultanément au moins une masse chinoise (20, 38) au manchon (5).

10. Rotor selon la revendication 9, caractérisé en ce qu'au moins une masse chinoise (38) comprend une douille (39), s'engageant dans un alésage (36) transversal du manchon (5'), et solidaire d'un collet (40), s'appliquant contre une face latérale du manchon (5'), et présentant au moins une clef de détrompage (41) pour son positionnement sur le manchon (5'), le collet (40) portant, du côté opposé à la douille (39), un contrepoids (42) incliné sensiblement vers le bord d'attaque et vers le dessus de l'extrados ou vers le bord de fuite et vers le dessous de l'intrados de la pale (2), selon que la masse chinoise (38) est fixée du côté respectivement de l'extrados ou de l'intrados de la pale (2).

11. Rotor selon l'une quelconque des revendications 1 à 10, caractérisé en ce que, pour chaque pale (2), la rotule (30) correspondante, portée par le levier de pas (23), et la bague (31) correspondante, portée dans la patte de commande (25), sont en carbure de tungstène ou en tout matériau analogue.

12. Rotor selon l'une quelconque des revendications 1 à 10, caractérisé en ce que, pour chaque pale (2'), la rotule (30') correspondante, portée par la patte de commande (25'), est en acier, et la bague (31') correspondante, portée par le levier de pas (23'), est en une matière plastique à faible coefficient de frottement, tel que le Torlon.

## Claims

1. A variable-pitch multi-blade rotor, for a helicopter ducted anti-torque device, comprising:
- a rotor shaft (14), mounted so that it rotates about an axis (A-A) of the rotor (1),
- a hub (12), rotationally secured to the rotor shaft (14),
- blades (2), each of which is connected to the hub (12) by a footing part comprising at least one flexible arm (18) which can be twisted about the longitudinal pitch change axis (X-X) of the blade (2), and which is partially housed in a blade root cuff (5), the cuff exhibiting two coaxial bearing surfaces (6, 7) spaced apart along the axis (X-X) of the blade (2), via which it is mounted so that it swivels about the axis (X-X) of the blade (2) in two bearings (8, 9) of the hub (12), as well as a pitch lever (23), which is off-centered with respect to the axis (X-X) of the blade (2), and
- a spider (26) for collective control of the pitch of the blades (2), which is rotationally driven with the hub (12) and can be given a translational movement along the axis (A-A) of the rotor (1) by means of a control rod (27), the spider (26) exhibiting, for each blade (2), a pitch control tab (25) extending substantially along the axis (A-A) of the rotor (1), and articulated to the pitch lever (23) of the corresponding blade (2) by means of a wrist pin (24) with ball joint (30), so that any axial displacement of the spider (26) with respect to the hub (12) gives rise, via the action of the tab (25) on the pitch lever (23), to a rotation of the blade (2) about its pitch axis (X-X),
characterized in that the ball joint (30) is carried by one of the two elements which are the lever (23) and the tab (25), and is engaged in an oblong opening (32) in a ring (31) carried by the other of the two elements, with clearance along each of the major and minor axes of the oblong opening (32), the clearance along the minor axis, substantially parallel to the axis (A-A) of the rotor (1), being less than the clearance along the major axis, perpendicular to the minor axis and transverse to the axis (X-X) of the blade (2), and each bearing surface (6, 7) of the cuff (5) is mounted in the corresponding bearing (8, 9) of the hub (12) with a clearance allowing the ball joint (30) to bear against the internal lateral face of the oblong opening (32) on the side of the ends of the minor axis but such that the ball joint (30) cannot come to bear against the internal lateral face of the oblong opening (32) on the side of the ends of the major axis.

2. The rotor as claimed in claim 1, characterized in that, for each blade (2), the ball joint (30) comes to bear flat with sliding point contact against the internal lateral face of the corresponding oblong opening (32).

3. The rotor as claimed in one of claims 1 and 2, characterized in that the oblong opening (32) exhibits two opposed flats (34) parallel to its major axis and which are symmetric with respect to its center, and is formed in a ring (31) inserted and fastened into a housing in the element which carries it and held by a shoulder (31a) against an edge of the said housing, and on which shoulder (31a) there are formed two flats (33) parallel to the major axis of the oblong opening (32).

4. The rotor as claimed in any of claims 1 to 3, characterized in that, for each blade (2), the cuff (5) carries the pitch lever (23) radially on the outside of the bearing surfaces (6, 7) toward the axis (A-A) of the rotor (1) and projecting toward the leading edge of the blade (2).

5. The rotor as claimed in any of claims 1 to 3, characterized in that, for each blade (2), the cuff (5) carries the pitch lever (23) radially on the outside and close to the bearing surface (6) in a radially external position with respect to the axis (A-A) of the rotor (1), and projecting toward the trailing edge of the blade (2).

6. The rotor as claimed in any of claims 1 to 3, characterized in that, for each blade (2), the pitch lever (23) carried by the cuff (5) between its two bearing surfaces (6, 7), and closer to the radially internal bearing surface (7) with respect to the axis (A-A) of the rotor (1) than to the other bearing surface (6), projects toward the leading edge of the blade (2).

7. The rotor as claimed in any of claims 1 to 3, characterized in that, for each blade (2), the pitch lever (23) carried by the cuff (5) between its two bearing surfaces (6, 7) and closer to the radially external bearing surface (6) with respect to the axis (A-A) of the rotor (1) than to the other bearing surface (7), projects toward the trailing edge of the blade (2).

8. The rotor as claimed in any of claims 1 to 7, characterized in that each twistable and flexible arm (18) is linked to the corresponding blade (2), while being held in the cuff (5) on the side of its radially external end with respect to the axis (A-A) of the rotor (1), by at least one fastening pin (19) which can float with respect to the cuff (5), substantially parallel to the axis (A-A) of the rotor (1) and extending substantially parallel to the axis (A-A) of the rotor (1) so as to give a tuning-weight effect.

9. The rotor as claimed in any of claims 1 to 8, characterized in that each twistable and flexible arm (18) is linked to the corresponding blade (2), being held in the cuff (5) on the side of its radially external end with respect to the axis (A-A) of the rotor (1), by at least one fastening pin (19) which can float with respect to the cuff (5), substantially parallel to the axis (A-A) of the rotor (1) and itself substantially parallel to the axis (A-A) of the rotor (1) and which simultaneously fastens at least one tuning weight (20) to the cuff (5).

10. The rotor as claimed in claim 9, characterized in that at least one tuning weight (38) comprises a bushing (39) engaging in a transverse bore (36) of the cuff (5') and secured to a collar (40) bearing against a lateral face of the cuff (5') and exhibiting at least one polarizing key (41) for positioning it on the cuff (5'), the collar (40) bearing, on the opposite side from the bushing (39), a counterweight (42) which is substantially inclined toward the leading edge and toward the upper side of the suction face or toward the trailing edge and toward the underside of the pressure face of the blade (2), depending on whether the tuning weight (38) is fastened respectively on the suction face side or on the pressure face side of the blade (2).

11. The rotor as claimed in any of claims 1 to 10, characterized in that, for each blade (2), the corresponding ball joint (30) carried by the pitch lever (23) and the corresponding ring (31) carried in the control tab (25) are made of tungsten carbide or any similar material.

12. The rotor as claimed in any of claims 1 to 10, characterized in that, for each blade (2'), the corresponding ball joint (30') carried by the control tab (25') is made of steel, and the corresponding ring (31') carried by the pitch lever (23') is made from a plastic with a low coefficient of friction, such as Torlon.

## Patentansprüche

1. Mehrblatt-Rotor mit veränderbarem Anstellwinkel für eine stromlinienförmige Gegendrehmoment-Vorrichtung für Hubschrauber, umfassend:
- eine Rotorwelle (14), die um eine Achse (A-A) des Rotors (1) drehbar angebracht ist,
- eine Nabe (12), die mit der Rotorwelle (14) drehungsvereint ist,
- Blätter (2), die mit der Nabe (12) jeweils über ein Wurzelstück verbunden sind, das wenigstens einen um die Längsachse (X-X) der Anstellwinkeländerung des Blattes (2) flexiblen und verwindbaren Arm (18), der teilweise in einer Muffe (5) des Blattfußes (4) untergebracht ist, wobei die Muffe (5) zwei koaxiale und bezüglich der Achse (X-X) des Blattes (2) auseinanderliegende Sitze (6, 7) aufweist, durch die sie um die Achse (X-X) des Blattes (2) herum in zwei Lagern (8, 9) der Nabe (12) zapfengelagert angebracht ist, sowie einen Anstellwinkelhebel (23) enthält, der in bezug auf die Achse (X-X) des Blattes (2) exzentrisch ist, und
- eine Scheibe (26) zur gemeinsamen Anstellwinkelsteuerung der Blätter (2), die mit der Nabe (12) drehangetrieben wird und bezüglich der Achse (A-A) des Rotors (1) durch eine Steuerachse (27) verschiebbar ist, wobei die Scheibe (26) für jedes Blatt (2) einen Lappen (25) zur Anstellwinkelsteuerung aufweist, der sich im wesentlichen entsprechend der Achse (A-A) des Rotors (1) erstreckt und am Anstellwinkelhebel (23) des entsprechenden Blattes (2) durch einen Zapfen (24) mit Kugelkopf (30) gelenkig angebracht ist, so daß jede axiale Verschiebung der Scheibe (26) in bezug auf die Nabe (12) durch Einwirkung des Lappens (25) auf den Anstellwinkelhebel (23) eine Drehung des Blattes (2) um seine Anstellwinkelachse (X-X) nach sich zieht, **dadurch gekennzeichnet**, daß der Kugelkopf (30) durch eines von zwei Elementen, nämlich dem Hebel (23) und dem Lappen (25), getragen wird, und in einer länglichen Öffnung (32) eines durch das andere der beiden Elemente getragenen Ringes (31) mit Spiel bezüglich jeweils der großen und der kleinen Achse der länglichen Öffnung (32) eingesetzt ist, wobei das Spiel bezüglich der kleinen Achse, die im wesentlichen parallel zur Achse (A-A) des Rotors (1) verläuft, kleiner ist als das Spiel entlang der großen Achse, die senkrecht auf der kleinen Achse steht und quer zur Achse (X-X) des Blattes (2) verläuft, und daß jeder Sitz (6, 7) der Muffe (5) im entsprechenden Lager (8, 9) der Nabe (12) mit einem Spiel angebracht ist, welches die Abstützung des Kugelkopfes (30) gegen die innere Seitenfläche der länglichen Öffnung (32) auf seiten der Enden der kleinen Achse erlaubt, allerdings so, daß der Kugelkopf (30) nicht in eine Abstützung gegen die innere Seitenfläche der länglichen Öffnung auf seiten der Enden der großen Achse gelangen kann.

2. Rotor nach Anspruch 1, **dadurch gekennzeichnet**, daß bei jedem Blatt (2) der Kugelkopf (30) in eine ebene Abstützung mit gleitender Punktberührung gegen die innere Seitenfläche der entsprechenden länglichen Öffnung (32) gelangt.

3. Rotor nach einem der Ansprüche 1 und 2, **dadurch gekennzeichnet**, daß die längliche Öffnung (32) zwei gegenüberliegende Flachstellen (34) aufweist, die parallel zu ihrer großen Achse und symmetrisch in bezug auf ihre Mitte verlaufen, und daß sie in einem Ring (31) vorgesehen ist, der in einer Aufnahme des ihn tragenden Elements untergebracht und befestigt ist und mittels einer Schulter (31a) gegen einen Rand der Aufnahme gehalten wird, und daß auf selbiger Schulter (31a) zwei zur großen Achse der länglichen Öffnung (32) parallele Abflachungen (33) vorgesehen sind.

4. Rotor nach einem der Ansprüche 1 bis 3, **dadurch gekennzeichnet**, daß bei jedem Blatt (2) die Muffe (5) den Anstellwinkelhebel (23) radial außerhalb der Sitze (6, 7) zur Achse (A-A) des Rotors (1) hin und zur Vorderkante des Blattes (2) hin vorspringend trägt.

5. Rotor nach einem der Ansprüche 1 bis 3, **dadurch gekennzeichnet**, daß bei jedem Blatt (2) die Muffe (5) den Anstellwinkelhebel (23) radial außen und in der Nähe des Sitzes (6) in äußerer radialer Position in bezug auf die Achse (A-A) des Rotors (1) und zur Hinterkante des Blattes (2) hin vorspringend trägt.

6. Rotor nach einem der Ansprüche 1 bis 3, **dadurch gekennzeichnet**, daß bei jedem Blatt (2) der durch die Muffe (5) zwischen ihren beiden Sitzen (6, 7) und zwar näher zu dem inneren radialen Sitz (7) in bezug auf die Achse (A-A) des Rotors (1) als zum anderen Sitz (6) getragene Anstellwinkelhebel (23) zur Vorderkante des Blattes (2) hin vorspringend ist.

7. Rotor nach einem der Ansprüche 1 bis 3, **dadurch gekennzeichnet**, daß bei jedem Blatt (2) der durch die Muffe (5) zwischen ihren beiden Sitzen (6, 7) und zwar näher zu dem äußeren radialen Sitz (6) in bezug auf die Achse (A-A) des Rotors (1) als zum anderen Sitz (7) getragene Anstellwinkelhebel (23) zur Hinterkante des Blattes (2) hin vorspringend ist.

8. Rotor nach einem der Ansprüche 1 bis 7, **dadurch gekennzeichnet**, daß jeder verwindbare und flexible Arm (18) mit dem entsprechenden Blatt (2) verbunden ist, indem er in der Muffe (5) auf seiten seines äußeren radialen Endes in bezug auf die Achse (A-A) des Rotors (1) durch zumindest eine Befestigungsachse (19) gehalten wird, die in bezug auf die Muffe (5) im wesentlichen parallel zur Achse (A-A) des Rotors (1) schwimmt und im wesentlichen parallel zur Achse (A-A) des Rotors (1) verläuft, um eine Wirkung von Ausgleichsgewichten herbeizuführen.

9. Rotor nach einem der Ansprüche 1 bis 8, **dadurch gekennzeichnet**, daß jeder verwindbare und flexible Arm (18) mit dem entsprechenden Blatt (2) verbunden ist, indem er in der Muffe (5) auf seiten seines äußeren radialen Endes in bezug auf die Achse (A-A) des Rotors (1) durch zumindest eine Befestigungsachse (19) gehalten wird, die in bezug auf die Muffe (5) im wesentlichen parallel zur Achse (A-A) des Rotors (1) schwimmt und selbst im wesentlichen parallel zur Achse (A-A) des Rotors (1) ist und durch die gleichzeitig wenigstens ein Ausgleichsgewicht (20, 38) an der Muffe (5) befestigt ist.

10. Rotor nach Anspruch 9, **dadurch gekennzeichnet**, daß zumindest ein Ausgleichsgewicht (38) eine Hülse (39) aufweist, die sich in eine Querbohrung (36) der Muffe (5') einfügt und mit einem Bund (40) zu einem Stück vereinigt ist, der sich gegen eine seitliche Fläche der Muffe (5') anlegt und zumindest einen Unverwechselbarkeitsschlüssel (41) für seine Positionierung auf der Muffe (5') aufweist, wobei der Bund (40) auf der der Hülse (39) gegenüberliegenden Seite ein im wesentlichen zur Vorderkante und zur Oberseite der Saugseite hin oder zur Hinterkante und zur Unterseite der Druckseite des Blattes (2) hin geneigtes Gegengewicht (42) trägt, je nachdem, ob die Ausgleichsgewicht (38) auf seiten der Saugseite bzw. auf seiten der Druckseite des Blattes (2) befestigt ist.

11. Rotor nach einem der Ansprüche 1 bis 10, **dadurch gekennzeichnet**, daß bei jedem Blatt (29) der entsprechende, durch den Anstellwinkelhebel (23) getragene Kugelkopf (30) und der entsprechende, im Steuerlappen (25) getragene Ring (31) aus Wolframkarbid oder aus jedem gleichartigen Material sind.

12. Rotor nach einem der Ansprüche 1 bis 10, **dadurch gekennzeichnet**, daß bei jedem Blatt (2') der entsprechende, durch den Steuerlappen (25') getragene Kugelkopf (30') aus Stahl und der entsprechende, durch den Anstellwinkelhebel (23') getragene Ring (31') aus einem Kunststoffmaterial mit geringem Reibungskoeffizient, wie beispielsweise Torlon, ist.
